# EUROPEAN PATENT SPECIFICATION

(11) **EP 0 864 461 B1**
(45) Date of publication and mention of the grant of the patent: **26.07.2000**
(21) Application number: 97120310.4
(22) Date of filing: 20.11.1997
(51) Int. Cl.: B60N 2/48

(54) **A headrest for motor vehicle seats, provided with means for a quick height adjustment**
Kopfstütze für Kraftfahrzeugsitze mit schneller Höhenverstellung
Appui-tête pour siège de véhicules automobiles avec réglage rapide de la hauteur

(30) Priority: 11.03.1997 IT TO970196
(43) Date of publication of application: 16.09.1998
(73) Proprietor: Martur Sünger ve Koltuk Tesisleri Tic. San. A.S. (Martur Co. Inc.), Günesli, Istanbul (TR)
(72) Inventor: Üstünberk, Umur, Corlu (TR)
(74) Representative: Robba, Pierpaolo

(56) References cited:
- EP-A- 0 603 136
- EP-A- 0 744 316
- DE-U- 29 613 073
- FR-A- 2 597 813
- FR-A- 2 606 345
- US-A- 4 671 573

## Description

The present invention relates to a headrest for motor vehicle seats, provided with means for a quick height adjustment (see, for example, DE-U-296 13 073, corresponding to the preamble of claim 1).

It is known that presently, in some types of motor vehicles, the height adjustment of the headrest is accomplished by moving such headrest with respect to fixed support rods projecting upwardly from and secured to the seatback.

Such adjustment is achieved by engaging at the desired position notches and projections formed on the rods and on slide guides, respectively, such engagement being firmly locked through elastic means, such as C-shaped springs, disposed in correspondence thereof.

Frequently the user is not aware of the existence of such elastic means and above all he/she does not know how to operate such adjustment and fixing means.

Therefore the mode of use of this system is not apparent at all, which is a remarkable drawback in the user's view.

A first example of an arrangement for the adjustment of a vehicle headrest is disclosed in the above-mentioned DE-U-29613073 which refers to a headrest for motor vehicles incorporating a single handle located on the bottom of the headrest body.

By shifting the handle either transversely or longitudinally depending on the embodiment, two springs are disengaged from the fixed support roads and the headrest can be positioned at the requested level.

However, the position of the handle is not immediately evident to the user and does not consent an easy access.

Another example of headrest for motor vehicles is disclosed in US-A-4671573.

According to US-A-4671573 no outer means are provided for adjusting the height of the headrest, whereby the headrest body can be adjusted by means of direct operation of the headrest body.

It is an object of the present invention to overcome such drawback, by providing a headrest that appears similar to the above described known headrests, and in which the means for operating the adjustment and locking means are immediately evident and easy to be used. Such headrest, that is easily to be accessed and operated because of its simplicity, allows to obtain lower costs with respect to the prior headrests so that it can be fitted to motor vehicles of the lower price segment, that in turn can meet the safety requirements of the laws in force.

This object is achieved through a headrest for motor vehicle seats as claimed in claim 1.

According to a first embodiment of the invention, the headrest comprises a single transverse rod provided with two projections each abutting against a corresponding laterally projecting end of the wire springs.

According to another embodiment of the invention, the headrest comprises two operating rods laterally disposed with respect to said headrest, each rod acting with a free end onto a laterally projecting end of said wire springs and being further provided with a push-button laterally protruding outside the headrest.

According to another embodiment of the invention, the headrest comprises two operating rods located rearwardly of said headrest and provided with operating push-buttons projecting at the rear of said headrest for acting on the laterally projecting ends of the wire springs along a direction orthogonal to the headrest frame, and the arms of said wire springs, the axes of said notches, and said passage slits all extend transversely to said frame.

The invention will now be described with reference to some non limiting embodiments illustrated in the attached drawings in which:

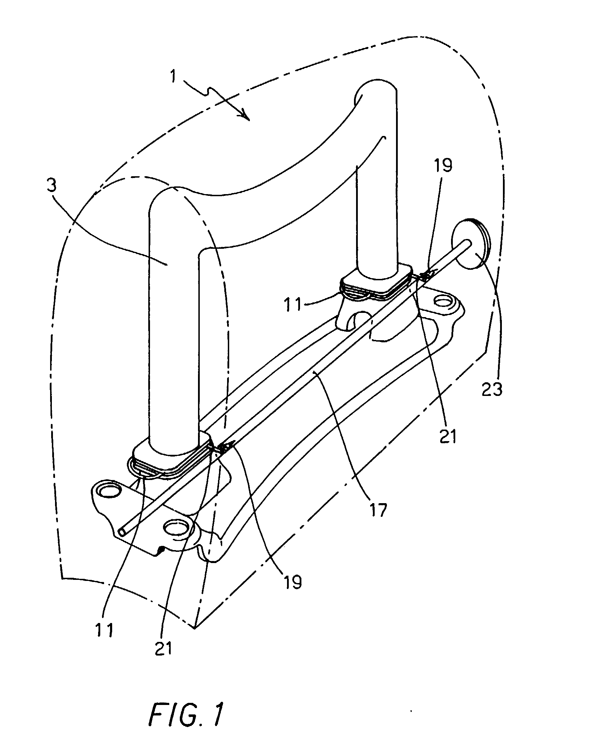

Fig. 1 is a schematic perspective view of the frame of a headrest in accordance with a first embodiment of the present invention;

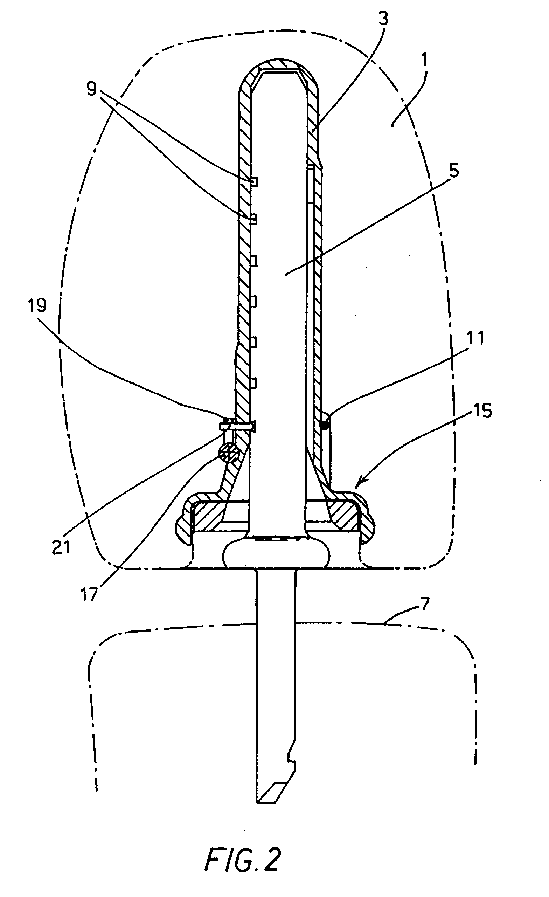

Fig. 2 is a cross section view taken along lines II-II of Fig. 1 and showing the notches provided on the support rods; and
Fig. 3 is a schematic plan view of a second embodiment of the present invention.

As clearly shown in Fig.s 1 and 2, the headrest 1 comprises, in a generally conventional way, a resilient body or cushion usually made of foamed plastic material and provided with an outer covering, and containing a rigid load bearing frame formed with two fixed tubular lateral uprights 3 secured to the headrest 1 and adapted to slidably receive two support rods 5 secured to and projecting from a seatback 7. The frame further comprises an upper cross piece joining the lateral uprights 3 of the frame. In the illustrated embodiments the rods 5 have a circular cross section.

Properly spaced notches 9 are provided on the rods 5 for locking at the selected position the tubular uprights 3, through wire springs 11 that comprises a substantially C-shaped metal member with an end portion 21 laterally projecting from one of the arms.

More precisely, each upright 3 is locked to a rod 5 by fitting a wire spring 11 into a desired notch 9 through a passage slit 13 formed near the end of the base 15 of each tubular upright 3.

The notches 9 are formed as recesses having a depth at least equal to the thickness (or in case the diameter) of the wire forming the spring 11. Thus each notch 9 is adapted to completely accomodate an arm of the spring 11 and prevent it from coming out of the nothch, unless properly designed displacing means are being used to this aim.

Such displacing means can spread apart the arms of the springs 11 so that the spring arms received in the seat formed by the notches 9 are moved outside of the notches, thus allowing the tubular uprights 3 to slide with respect to the fixed support rods 5.

According to a first embodiment of the invention, such displacing means comprises a transverse rod 17 provided with projections 19 abutting against the laterally projecting ends 21 of the wire springs 11. The rod 17 is movable along its axis and is provided with an outer push-button 23 for actuating (i.e. pushing) the rod. When the transverse rod 17 is laterally moved by pushing the button 23, the projections 19 urge the projecting ends 21 of the pring 11 to "open", i.e. to spread the spring arms apart, thus disengaging the uprights 3 from the rods 5. The headrest 1 can now slide along the rods 5 until it reaches the desired position where it is firmly secured or locked by releasing the push-button 23. This causes the elastic return of the arms of the wire springs 11 into the notches 9 that are located at the desired height, through the passage slits 13 in the base 15 of the upright 3.

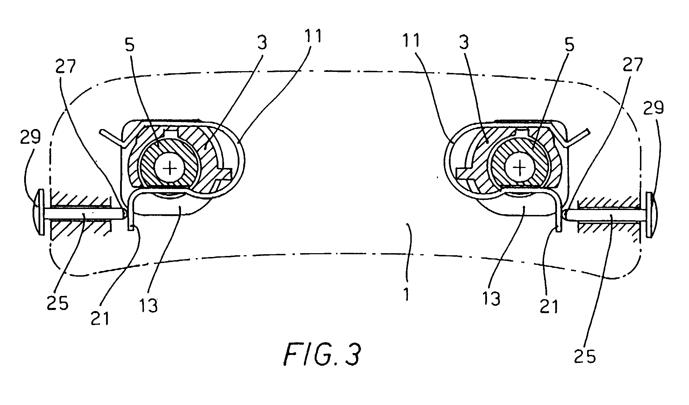

A second embodiment of the invention, illustrated in Fig. 3, is similar to the first embodiment, but for the provision of two (shorter) operating rods 25, laterally disposed with respect to the headrest 1, each rod acting with a free end 27 onto the projecting end 21 of a wire spring 11. Each rod 25 is further provided with a push-button 29 laterally projecting outside the headrest.

When both push-buttons 29 are simultaneously pressed the arms of the wire springs are spread outwardly and the uprights 3 are disengaged from the rods 5, whereby the headrest can now slide along the rods 5 for being positioned at a desired location and being locked there by releasing the push-buttons 29. This way the arms of the wire springs elastically return into the notches 9 on the fixed rods 5 through the passage slits 13.

It is evident that the invention is not limited to the described and illustrated embodiments, and that modifications and changes can be made if not thereby departing from the scope of the present invention as defined in the appended claims.

## Claims

1. A headrest (1) for motor vehicle seats, comprising a cushion containing a rigid load bearing frame formed with two fixed tubular lateral uprights (3) secured to said headrest (1) and adapted to slidably receive two support rods (5) secured to and protruding from a seatback (7), said rods (5) being provided with spaced notches (9) for engaging and locking said uprights (3) through a C-shaped wire spring (11) in each of said tubular uprights (3) fitting into a desired notch (9) through a slit (13) formed near the end of the base (15) of said uprights (3), said notches (9) being formed as recesses having a depth at least equal to the thickness of the wire forming said springs (11) so as to completely accommodate an arm of said wire spring (11), said headrest (1) comprising at least one transverse operating rod (17; 25) provided with outer operating means (23; 29) for axially moving said operating rod (17; 25) to spread apart the arms of said wire spring (11) and disengage said uprights (3) from said rods (5); whereby the headrest (1) can slide along the rods (5) until it reaches a desired position where it is locked by releasing said outer operating means (23; 29), **characterized in that** said outer operating means consists of a push button (23; 29) provided at one end of said at least one transverse operating rod (17; 25) and laterally disposed with respect to the headrest (1).

2. A headrest (1) according to claim 1, characterised in that it comprises a single transverse rod (17) provided with two projections (19) each abutting against a corresponding laterally projecting end (21) of the wire springs (11).

3. A headrest (1) according to claim 1, characterised in that it comprises two transverse operating rods (25) each rod acting with a free end (27) onto a laterally projecting end (21) of said wire springs (11) and being further provided with a push-button (29) laterally projecting outside the headrest (1).

## Patentansprüche

1. Kopfstütze (1) für Kraftffahrzeugsitze, mit einem einen starren lastaufnehmenden Rahmen aufweisenden Polster, wobei der Rahmen aus zwei festen rohrförmigen, aufwärts verlaufenden Stützen (3) gebildet ist, die an der Kopfstütze (1) befestigt sind, zwei Stützstangen (5) gleitend aufnehmen und von einer Rükkenlehne (7) abstehen, von denen die Stangen (5) mit Abstand voneinander angeordnete Ausnehmungen (9) aufweisen, die zur Aufnahme und Halterung der Stützen (3) mittels einer C-förmigen Drahtfeder (11) dienen, die in jeder der rohrförmigen Stützen (3) vorgesehen ist und durch einen Schlitz (13) nahe des Fußteils (15) der Stützen (3) in eine gewünschte Ausnehmung (9) passen, wobei die Ausnehmungen (9) als Vertiefungen ausgebildet sind, deren Tiefe mindestens der Dicke des Drahtes entspricht, aus dem die Federn (11) gebildet sind, um vollständig einen Arm der Drahtfeder (11) aufzunehmen, wobei die Kopfstütze (1) mindestens eine quer liegende Betätigungsstange (17; 25) mit äußeren Betätigungselementen (23; 29) zum axialen Verschieben der Betätigungsstange (17; 25) aufweist, die die Arme der Drahtfeder (11) auseinanderdrückt, so daß die Stützen (3) von den Stangen (5) frelkommen; wobei die Kopfstütze (1) längs der Stangen (5) gleitbar ist, bis sie die gewünschte Position erreicht hat, in der sie durch Freigabe der äußeren Betätigungselemente (23; 29) arretiert wird,
dadurch gekennzeichnet, daß die äußeren Betätigungselemente aus einem Druckknopf (23; 29) bestehen, der an einem Ende der mindestens einen quer verlaufenden Betätigungsstange (17; 25) und seitlich in bezug auf die Kopfstütze (1) angeordnet ist.

2. Kopfstütze (1) nach Anspruch 1,
dadurch gekennzeichnet, daß sie eine einzige quer sich erstreckende Stange (17) mit zwei Vorsprüngen (19) aufweist, die jeweils an einem entsprechenden, seitlich vorstehenden Ende (21) der Drahtfedern (11) anliegen.

3. Kopfstütze (1) nach Anspruch 1,
dadurch gekennzeichnet, daß sie zwei quer sich erstreckende Betätigungsstangen (25) aufweist, die jeweils mit einem freien Ende (27) mit einem seitlich vorstehenden Ende (21) der Drahtfedern (11) zusammenwirken und mit einem Druckknopf (29) seitlich aus der Kopfstütze (1) vorstehen.

## Revendications

1. Appuie-tête (1) pour sièges de véhicule automobile, comprenant un coussin contenant un châssis de support de charge rigide formé de deux montants latéraux tubulaires fixes (3) attachés audit appuie-tête (1) et adaptés pour recevoir de manière coulissante deux tiges de support (5) fixées à et faisant saillie d'un dossier de siège (7), lesdites tiges (5) étant pourvues d'encoches espacées (9) pour mettre en prise et bloquer lesdits montants (3) au moyen d'un ressort métallique en forme de C (11) dans chacun desdits montants tubulaires (3) s'ajustant dans une encoche souhaitée (9) à travers une fente (13) formée près de l'extrémité de la base (15) desdits montants (3), lesdites encoches (9) étant formées comme des creux ayant une profondeur au moins égale à l'épaisseur du fil métallique formant lesdits ressorts (11) afin de recevoir intégralement un bras dudit ressort métallique (11), ledit appuie-tête (1) comprenant au moins une tige d'actionnement transversale (17 ; 25) munie de moyens d'actionnement extérieurs (23 ; 29) pour déplacer axialement ladite tige d'actionnement (17 ; 25) pour écarter les bras dudit ressort métallique (11) et dégager lesdits montants (3) desdites tiges (5) ; de telle sorte que l'appuie-tête (1) peut coulisser le long des tiges (5) jusqu'à ce qu'il atteigne une position souhaitée dans laquelle il est bloqué en libérant lesdits moyens d'actionnement extérieurs (23 ; 29), caractérisé en ce que lesdits moyens d'actionnement extérieurs sont constitués d'un bouton poussoir (23 ; 29) prévu à une extrémité de ladite au moins une tige d'actionnement transversale (17 ; 25) et disposé latéralement par rapport à l'appuie-tête (1).

2. Appuie-tête (1) selon la revendication 1, caractérisé en ce qu'il comprend une tige transversale unique (17) pourvue de deux saillies (19) venant chacune en butée contre une extrémité faisant saillie latéralement (21) des ressorts métalliques (11).

3. Appuie-tête (1) selon la revendication 1, caractérisé en ce qu'il comprend deux tiges d'actionnement transversales (25), chaque tige sollicitant, avec une extrémité libre (27), une extrémité faisant saillie latéralement (21) desdits ressorts métalliques (11) et étant en outre munie d'un bouton poussoir (29) faisant saillie latéralement à l'extérieur de l'appuie-tête (1).
